# EUROPÄISCHE PATENTSCHRIFT

(11) **EP 2 145 532 B1**
(45) Veröffentlichungstag und Bekanntmachung des Hinweises auf die Patenterteilung: **06.01.2016**
(21) Anmeldenummer: 09007031.9
(22) Anmeldetag: 27.05.2009
(51) Int. Cl.: A01F 29/10, A01F 29/14, A01D 43/08

(54) **Landwirtschaftliche Arbeitsmaschine, insbesondere Feldhäcksler**
Agricultural work machine, in particular chaff cutter
Machine de travail agricole, notamment récolteuse-hacheuse

(30) Priorität: 18.07.2008 DE 102008033919
(43) Veröffentlichungstag der Anmeldung: 20.01.2010
(73) Patentinhaber: GKN Walterscheid GmbH, 53797 Lohmar (DE)
(72) Erfinder: Pietsch, Gottfried, 02627 Hochkirch (DE); Rauschenbach, Stefan, 02692 Großpostwitz (DE); Roth, Andreas, 53819 Neunkirchen-Seescheid (DE)
(74) Vertreter: Müller, Thomas Michael

(56) Entgegenhaltungen:
- EP-A- 0 300 299
- EP-A- 0 567 851
- EP-A- 1 609 351
- EP-A- 1 875 793
- DE-A1- 19 606 388

## Beschreibung

Die Erfindung betrifft eine landwirtschaftliche Arbeitsmaschine, insbesondere Feldhäcksler, umfassend ein Trägerfahrzeug, eine dem Trägerfahrzeug zugeordnete und an diesem montierte Einzugseinheit mit mindestens einer Einzugswalze zum Zuführen von Erntegut zu einer Häckseltrommel zum Zerkleinern des Ernteguts und mit einem Einzugsgetriebe, das mit der mindestens einen Einzugswalze antriebsverbunden ist, einen Hydromotor zum Antreiben des Einzugsgetriebes, wobei der Hydromotor eine Antriebswelle aufweist.

Eine solche Arbeitsmaschine ist aus der EP 1 609 351 A bekannt.

Aus der DE 196 06 388 A1 ist ein selbstfahrender Feldhäcksler bekannt, der ein Trägerfahrzeug aufweist, an dem in Fahrtrichtung gesehen vorne ein Vorsatzgerät in Form eines Mähwerks mit Haspel vorgesehen ist, um Erntegut zu schneiden und über Zuführorgane einer Einzugseinheit zuzuführen. Die Einzugseinheit ist ebenfalls am Trägerfahrzeug befestigt und umfasst Einzugswalzen und Vorpresswalzen, die paarweise zueinander angeordnet sind und gegenläufig drehend angetrieben sind. Die Einzugseinheit dient dazu, den Erntegutstrom einer ebenfalls im Trägerfahrzeug vorgesehenen Häckseltrommel zur Zerkleinerung des Erntegutes zuzuführen. Der Häckseltrommel nachgeordnet ist ein Nachbeschleuniger angeordnet, der das zerkleinerte Häckselgut durch einen Auswurfkanal befördert, um das Erntegut an ein Ladefahrzeug übergeben zu können.

Die Einzugseinheit ist vor den Vorderrädern des Trägerfahrzeugs angeordnet und wird über Gelenkwellen, die mit einem Getriebe antriebsverbunden sind, angetrieben. Das Getriebe befindet sich hierbei ebenfalls vor den Vorderrädern. Um Wartungsarbeiten an der Häckseltrommel vornehmen zu können, müssen sowohl das Vorsatzgerät als auch die Einzugseinheit demontierbar sein. Zum Demontieren der Einzugseinheit lassen sich die Gelenkwellen, die das Getriebe mit der Einzugseinheit antriebsverbinden, von der Einzugseinheit abkoppeln, so dass die Einzugseinheit samt Einzugswalzen und Vorpresswalzen vom Trägerfahrzeug entfernt werden kann, wobei dies in der Regel durch Verschwenken der Einzugseinheit am Trägerfahrzeug geschieht. Die Einzugseinheit wird daher in der Regel nicht vollständig vom Trägerfahrzeug entfernt, sondern seitlich weggeschwenkt, um die Zugänglichkeit zur Häckseltrommel zur gewährleisten. Das Getriebe, mittels dessen die Einzugseinheit angetrieben wird, bleibt fest am Trägerfahrzeug und wird nicht mitgeschwenkt, da diese nicht der Einzugseinheit zugeordnet ist. Dies ist auch daher erforderlich, da das Getriebe mittels eines Hydromotors angetrieben wird, der direkt am Getriebegehäuse des Getriebes angeflanscht ist und die Hydraulikleitungen in der Regel eine große Winkelbewegung des Hydromotors zusammen mit dem Getriebe auf Grund ihrer geringen Flexibilität nicht ausführen können.

Aus der DE 10 2006 030 971 A1 ist ebenfalls ein selbstfahrender Feldhäcksler bekannt, wobei sich die Einzugseinheit zwischen den Vorderrädern des Trägerfahrzeugs befindet. Das Getriebe zum Antreiben der Einzugs- und Vorpresswalzen ist daher unmittelbar mit den Walzen verbunden, so dass auf Grund der fehlenden Gelenkwellen das Getriebe näher an den Walzen befindet und sowohl die Walzen als auch das Getriebe zwischen den Vorderrädern Platz finden. Das Getriebe ist daher Bestandteil der Einzugseinheit und wird zu Wartungszwecken gemeinsam mit den Einzugswalzen vom Trägerfahrzeug zumindest teilweise entfernt bzw. verschwenkt. Um das Verschwenken bzw. das Verstellen des Getriebes zu ermöglichen, ist das Getriebe über eine Gelenkwellenanordnung mit einem Hydromotor verbunden, wobei sich der Hydromotor im hinteren Bereich des Trägerfahrzeugs befindet. Zum Entfernen der Einzugseinheit kann die Gelenkwellenanordnung vom Getriebe abgekoppelt werden.

Aufgabe der vorliegenden Erfindung ist es, eine landwirtschaftliche Arbeitsmaschine gemäß Anspruch 1 gelöst.

Der Hydromotor ist unmittelbar mit dem Einzugsgetriebe verbunden und nicht über eine Gelenkwellenanordnung, wobei die Hydraulikleitungen beliebig bis zum Einzugsgetriebe geführt werden können und somit platzsparend angeordnet werden können. Ferner sind die Einzugswalzen unmittelbar vom Einzugsgetriebe angetrieben und nicht über Gelenkwellen, wodurch ein platzsparender Aufbau gewährleistet ist. Um bei einer solchen Anordnung dennoch ein Verschwenken der Einzugseinheit zu gewährleisten, wobei das Einzugsgetriebe aufgrund des direkten Antriebs zwischen Einzugsgetriebe und Einzugswalzen mit verschwenkt werden muss und somit zur Einzugseinheit gehört, ist vorgesehen, dass der Hydromotor nicht der Einzugseinheit sondern dem Trägerfahrzeug zugeordnet ist. Dies bedeutet, dass der Hydromotor nicht zu Wartungszwecken gemeinsam mit der Einzugseinheit beziehungsweise dem Einzugsgetriebe vom Trägerfahrzeug entfernt oder an diesem verschwenkt wird. Vielmehr ist der Hydromotor am Trägerfahrzeug befestigt, wobei dieser durchaus zum Beispiel schwenkbar am Trägerfahrzeug befestigt sein kann, um zunächst ein Lösen der Antriebsverbindung zwischen dem Hydromotor und dem Einzugsgetriebe durch Verstellen des Hydromotors zu gewährleisten, woraufhin die Einzugseinheit mit dem Einzugsgetriebe in eine Wartungsstellung verstellt werden kann. In diesem Zusammenhang bedeutet das Entfernen der Einzugseinheit nicht zwangsläufig, dass die Einzugseinheit vollständig vom Trägerfahrzeug gelöst wird. Die Einzugseinheit wird relativ zum Trägerfahrzeug derart bewegt, dass eine Zugänglichkeit zur Häckseltrommel erzielt wird. Hierzu wird eine feste Verbindung der Einzugseinheit am Trägerfahrzeug gelöst, so dass die Einzugseinheit von der Häckseltrommel weg bewegt werden kann. Hierbei kann die Einzugseinheit verschwenkt und/oder translatorisch bewegt werden oder vollständig vom Trägerfahrzeug abgenommen werden.

Die Einzugseinheit kann zwischen einer Arbeitsstellung und einer Wartungsstellung verstellbar, insbesondere schwenkbar, am Trägerfahrzeug befestigt sein. In der Arbeitsstellung lässt sich der Hydromotor mit dem Einzugsgetriebe verbinden.

Gemäß einem Ausführungsbeispiel ist die Antriebswelle des Hydromotors formschlüssig mit der Eingangswelle des Einzugsgetriebes lösbar verbunden.

Hierbei kann die Antriebswelle des Hydromotors auf einer Außenumfangsfläche einer Längsverzahnung aufweisen. Die Eingangswelle des Einzugsgetriebes weist dann eine zentrale Bohrung mit einer Längsverzahnung auf, wobei in dem mit dem Einzugsgetriebe antriebsverbundenen Zustand des Hydromotors die Antriebswelle formschlüssig in der Bohrung der Eingangswelle sitzt. Dementsprechend ist die Längsverzahnung auf der Außenumfangsfläche der Antriebswelle komplementär zur Längsverzahnung der Bohrung der Eingangswelle gestaltet.

Um Passungskorrosion an den Längsverzahnungen zu vermeiden, kann vorgesehen sein, dass die Bohrung der Eingangswelle im Schmierverbund mit dem Einzugsgetriebe ist und hierfür mit einem Getriebeinnenraum des Einzugsgetriebes verbunden ist.

Zum lösbaren und sicheren Verbinden des Hydromotors mit dem Einzugsgetriebe können Schnellspanneinheiten vorgesehen sein, über die der Hydromotor mit einem Getriebegehäuse des Einzuggetriebes lösbar verbunden ist.

Ein bevorzugtes Ausführungsbeispiel der erfindungsgemäßen landwirtschaftlichen Arbeitsmaschine wird im folgenden anhand der Zeichnungen näher erläutert.

Hierin zeigt:
- Figur 1: eine perspektivische Explosionsdarstellung einer Antriebsanordnung eines Feldhäckslers;
- Figur 2: eine Seitenansicht des Einzugsgetriebes mit Hydromotor;
- Figur 3: einen Schnitt durch das Einzugsgetriebe mit einer ersten Ausführungsform einer Antriebsverbindung zwischen Hydromotor und Einzugsgetriebe;
- Figur 4: einen Schnitt durch das Einzugsgetriebe mit einer zweiten Ausführungsform einer Antriebsverbindung zwischen Hydromotor und Einzugsgetriebe.

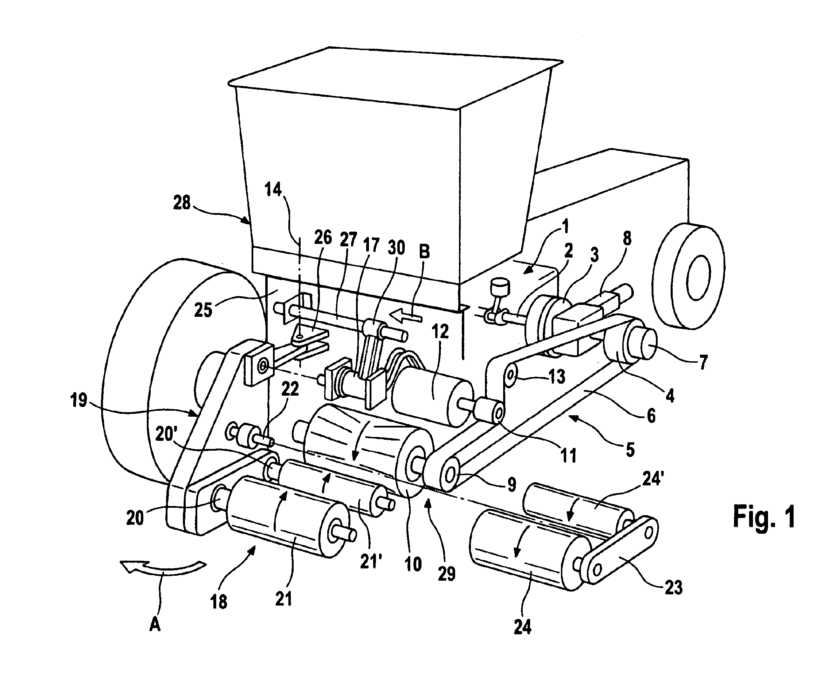

Figur 1 zeigt eine perspektivische Explosionsdarstellung eines Antriebssystems eines Feldhäckslers, wobei ein Trägerfahrzeug 28 des Feldhäckslers mit Fahrzeuggestell 25 schematisch angedeutet ist. An dem Trägerfahrzeug 28 ist in Fahrtrichtung betrachtet vorne ein Vorsatzgerät zum Beispiel mit einem Schneidwerk und Förderorganen zum Schneiden und Fördern des Erntegutes befestigt. Das Vorsatzgerät ist hier der Übersichtlichkeit halber nicht dargestellt. Das Erntegut wird dann in Fahrtrichtung betrachtet nach hinten zu einer Einzugseinheit 18 des Feldhäckslers gefördert. Die Einzugseinheit dient dazu, dass Erntegut weiter zu transportieren und vorzupressen und der dahinter angeordneten Häckseleinheit 29 zuzuführen, wo das Erntegut zerkleinert wird.

Zum Antreiben der verschiedenen Arbeitsaggregate und Einheiten ist ein Antriebsmotor 1 in Form eines Verbrennungsmotors vorgesehen, der über eine Kurbelwelle 2 mit einem Motorabtriebsgetriebe 3 antriebsverbunden ist. Das Motorabtriebsgetriebe 3 ist als Verteilergetriebe gestaltet und treibt unter anderem eine Riemenscheibe 4 an, welche als Antriebsriemenscheibe für einen Riementrieb 5 dient und einen Riemen 6 antreibt. Die Antriebsriemenscheibe 4 kann mittels einer Schaltkupplung 7 vom Antrieb des Motorabtriebsgetriebes 3 wahlweise getrennt oder diesem zugeschaltet werden. Somit kann bei laufendem Antriebsmotor 1 der Riementrieb 5 abgeschaltet werden. Über die Schaltkupplung 7 wird ferner eine Hydropumpe 8 wahlweise zu- oder abgeschaltet. Hierzu ist eine Antriebswelle zum Antreiben der ersten Hydropumpe 8 mit der Antriebsriemenscheibe 4 antriebsverbunden.

Der Riementrieb 5 umfasst ferner eine erste Abtriebsriemenscheibe 9 zum Antreiben einer Häckseltrommel 10 der Häckseleinheit 29. Die Häckseltrommel 10 dient zum Zerkleinern des Ernteguts. Der Erntegutstrom wird von der Häckseltrommel 10 weiter zu einer Nachbeschleunigertrommel 12 gefördert, von wo aus das Erntegut über einen hier nicht dargestellten Auswurfkanal gefördert wird. Die Nachbeschleunigertrommel 12 wird über eine zweite Abtriebsriemenscheibe 11 des Riementriebs 5 angetrieben. Im vorliegenden Fall befindet sich die zweite Abtriebsriemenscheibe 11 im Leertrum des Riementriebs 5 zwischen der Antriebsriemenscheibe 4 und der ersten Abtriebsriemenscheibe 9. Im Leertrum befindet sich ferner, in Bewegungsrichtung des Riemens 6 betrachtet vor der zweiten Abtriebsriemenscheibe 11, ein Riemenspanner 13 zum Spannen des Riemens 6.

Die Hydropumpe 8 ist über hier nicht dargestellte Hydraulikleitungen mit einem Hydromotor 17 zum Antreiben der Einzugseinheit 18 verbunden und treibt diesen hydraulisch an. Der Hydromotor 17 ist lösbar mit einem ersten Einzugsgetriebe 19 der Einzugseinheit 18 antriebsverbunden. Das erste Einzugsgetriebe 19 weist mehrere Abtriebswellen 20, 20' auf, die jeweils mit einer unteren Einzugswalze 21,21' antriebsverbunden sind und diese drehend antreiben. Über eine Gelenkwelle 22, die hier nur schematisch dargestellt ist, ist das erste Einzugsgetriebe 19 zu dem mit einem zweiten Einzugsgetriebe 23 antriebsverbunden, über welches obere Einzugswalzen 24, 24' drehend angetrieben sind. Die Einzugseinheit 18 dient dazu, ein Erntegutstrom der Häckseltrommel 10 zuzuführen. Hierzu sind jeweils eine untere Einzugswalze 21, 21' und eine obere Einzugswalze 24, 24' jeweils paarweise zueinander gegenüberliegend angeordnet und laufen gegensinnig.

Um bei Wartungsarbeiten an der Häckseltrommel die Zugänglichkeit zu dieser zu gewährleisten, ist die Einzugseinheit 18 über hier schematisch dargestellte Scharniere 26 um eine vertikale Schwenkachse 14 schwenkbar am Trägerfahrzeug 28 bzw. dem Fahrzeuggestell 25 befestigt. Somit kann die Einzugseinheit 18 aus der in Figur 1 dargestellten Arbeitsstellung in eine in Richtung des Pfeils A geschwenkte Wartungsstellung überführt werden, wobei die Einzugseinheit 18 annähernd 90° zum Trägerfahrzeug 28 verschwenkt werden kann, so dass die Häckseltrommel 10 von vorne zugänglich ist. Um das Verschwenken der Einzugseinheit 18 zu ermöglichen, ist der Hydromotor 17 lösbar mit dem ersten Einzugsgetriebe 19 verbunden. Der Hydromotor 17 ist zu dem an einem Tragelement 30 befestigt, wobei das Tragelement 30 entlang einer Schiene 27, die am Trägerfahrzeug 28 befestigt ist, verschiebbar ist. Der Hydromotor 17 lässt sich somit gegenüber dem Trägerfahrzeug 28 und gegenüber der Einzugseinheit 18 aus der in Figur 1 dargestellten entkoppelten Stellung in eine in Pfeilrichtung B verschwenkte gekoppelte Stellung verstellen. In der gekoppelten Stellung ist der Hydromotor 17 mit dem ersten Einzugsgetriebe 19 antriebsverbunden. In der entkoppelten Stellung ist die Antriebsverbindung zwischen dem Hydromotor 17 und dem ersten Einzugsgetriebe 19 unterbrochen bzw. der Hydromotor 17 nicht mehr mit dem ersten Einzugsgetriebe 19 antriebsverbunden. In dieser Stellung kann dann die Einzugseinheit 18 seitlich verschwenkt werden.

Um den Hydromotor 17 von seiner gekoppelten Stellung in seine entkoppelte Stellung zu überführen, ist nur ein geringer Verstellweg erforderlich. Grundsätzlich kann der Hydromotor 17 auch verschwenkbar am Trägerfahrzeug 28 vorgesehen sein. Die Bewegung, die erforderlich ist, um den Hydromotor 17 von der gekoppelten Stellung in die entkoppelte Stellung zu überführen, ist verhältnismäßig gering, so dass die Hydraulikleitungen, mit denen der Hydromotor 17 verbunden ist, nur geringfügig verlagert beziehungsweise verformt werden. Eine große Verformung der Hydraulikleitungen ist in der Regel nicht möglich, da diese nur eine begrenzte Flexibilität aufweisen. Somit werden die Hydraulikleitungen weniger belastet, als wenn der Hydromotor 17 beim Verschwenken der Einzugseinheit 18 am ersten Einzugsgetriebe 19 verbleiben würde.

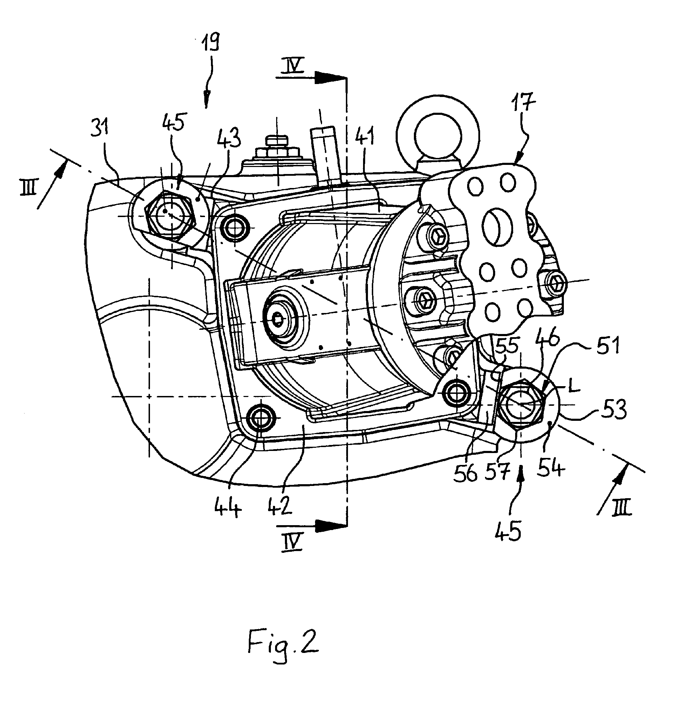

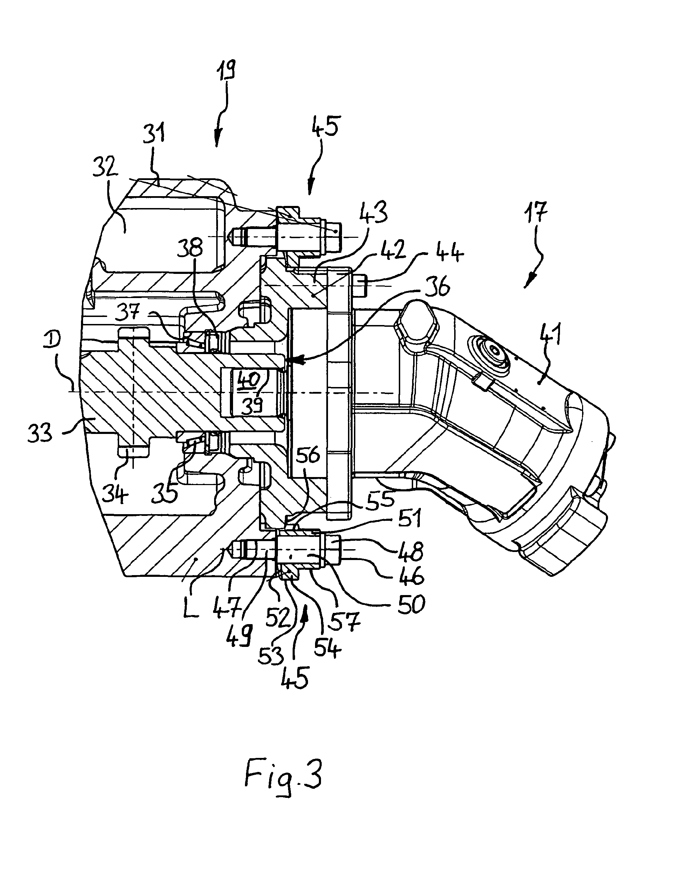

Die Figuren 2 und 3 zeigen eine erste Ausführungsform einer Verbindungsanordnung zwischen dem Hydromotor 17 und dem ersten Einzugsgetriebe 19 und werden im folgenden zusammen beschrieben.

Das erste Einzugsgetriebe 19 umfasst ein Getriebegehäuse 31, welches einen Getriebeinnenraum 32 bildet. Der Getrieberaum 32 ist teilweise mit Öl gefüllt. In dem Getriebegehäuse 31 ist eine Eingangswelle 33 um eine Drehachse D drehbar gelagert. Hierzu diesen Kegelrollenlager 35, die in Lagerbohrungen 37 des Getriebegehäuses 31 vorgesehen sind. Die Eingangswelle 33 weist einen im Getriebeinnenraum 32 angeordneten Zahnradabschnitt 34 auf, der mit einem weiteren hier nicht dargestellten Zahnrad einer Getriebestufe kämmt. Ein Wellenende 36 der Eingangswelle 33 ist durch die Lagerbohrung 37 aus dem Getriebeinnenraum 32 herausgeführt. Um den Getriebeinnenraum 32 nach außen hin abzudichten, ist ein Radialwellendichtring 38 vorgesehen, der in der Lagerbohrung 37 sitzt und in dichtender Anlage zu einer Außenumfangsfläche der Eingangswelle 33 gehalten ist.

In dem Wellenende 36 ist koaxial zur Drehachse D eine zentrale Bohrung 39 vorgesehen, in die eine Antriebswelle 40 des zweiten Hydromotors eintaucht. Die Bohrung 39 weist eine hier nicht dargestellte Längsverzahnung auf, die in Eingriff zu einer ebenfalls nicht dargestellten Längsverzahnung der Antriebswelle 40 ist. Somit ist die Antriebswelle 40 mit der Eingangswelle 33 antriebsverbunden und es kann Drehmoment von der Antriebswelle 40 auf die Eingangswelle 33 übertragen werden. Aufgrund der Längsverzahnungen lässt sich zudem die Antriebswelle 40 einfach von der Eingangswelle 33 entkoppeln, indem die Antriebswelle 40 aus der zentralen Bohrung 39 axial zur Drehachse D rausgezogen wird.

Der Hydromotor 17 weist ein Gehäuse 41 mit einem Flansch 42 auf. Der Flansch 42 ist über Befestigungsschrauben 44 mit einem Adapter 43 verbunden. Der Adapter 43 ist ferner über Schnellspanneinheiten 45 schnell lösbar mit dem Getriebegehäuse 31 des ersten Einzugsgetriebes 90 verbunden, so dass der Hydromotor 17 und der Adapter 43 einfach mit dem ersten Einzugsgetriebe 19 verbunden und von diesem getrennt werden können.

Grundsätzlich ist es auch denkbar, dass nicht Schnellspanneinheiten 45 sondern normale Befestigungsschrauben zur Befestigung des Adapters 43 vorgesehen sind. Eine andere Alternative besteht darin, den Hydromotor 17 über den Flansch 42 direkt mit dem Getriebegehäuse 31 des ersten Einzugsgetriebes 19 zu verbinden. In diesem Fall können ebenfalls einfache Befestigungsschrauben oder Schnellspanneinheiten zum Einsatz kommen.

Die Schnellspanneinheiten 45 weisen jeweils eine Schraube 46 auf, die mit einem Gewindeabschnitt 49 in eine Gewindebohrung 47 des Getriebegehäuses 31 eingeschraubt ist. Zwischen einem Schraubenkopf 48 und dem Gewindeabschnitt 49 weist die Schraube 46 einen zylindrischen Lagerabschnitt 50 auf, mit dem die Schraube 46 in Richtung einer Längsachse L der Schraube 46 axial gegen das Getriebegehäuse 31 abgestützt ist. Der Lagerabschnitt 50 steht somit vom Getriebegehäuse 31 vor. Auf dem Lagerabschnitt 50 ist eine Spannhülse 51 um die Längsachse L drehbar angeordnet. Die Spannhülse 51 weist einen Flanschabschnitt 44 auf, der radial von der Spannhülse 51 vorsteht. Ferner ist ein Außensechskant 57 vorgesehen, über den die Spannhülse 51 mittels eines Werkzeugs gedreht werden kann. Der Flanschabschnitt 54 weist eine Außenkontur 53 mit einer Ausnehmung 55 auf, wobei die Ausnehmung 55 in Form einer Sekante zur übrigen kreisrunden Außenkontur 43 des Flanschabschnitts 54 gestaltet ist. Die Spannhülse 51 kann um die Längsachse L zwischen einer Fügeposition und einer Spannposition gedreht werden. In Figur 2 sind zwei Spanneinheiten 45 dargestellt, wobei die in der Darstellung gemäß Figur 2 rechts abgebildete Spannhülse sich in der Fügeposition befindet und die links dargestellte Spannhülse sich in der Spannposition befindet. In der Fügeposition ist im Bereich der Ausnehmung 55 der Spannhülse 51 eine Spanngegenfläche 56 des Adapters 43 angeordnet. Die Spanngegenfläche 56 und der Adapter 53 sind derart gestaltet, dass der Adapter 43 in einer Fügerichtung parallel zu den Längsachsen L der Schnellspanneinheiten 45 an das Getriebegehäuse 31 in Anlage gebracht werden kann. Dann kann die Spannhülse 51 von Ihrer Fügeposition in die Spannposition gedreht werden, in der der Flanschabschnitt 54 der Spannhülse 51 die Spanngegenfläche 56 hintergreift, wobei eine stirnseitige Spannfläche 52 des Flanschabschnitts 54 gegen die Spanngegenfläche 56 gespannt wird. Die Spannfläche 52 verläuft hierbei bezogen auf die Längsachse L schraubenförmig, so dass durch weiteres Drehen der Spannhülse 51 der Adapter 53 gegen das Getriebegehäuse 31 verspannt wird. Im letzten Bereich ist ein Winkel zwischen der Spannfläche 52 und einer Ebene, die senkrecht zur Längsachse L angeordnet ist, so groß bemessen, dass eine Selbsthemmung der Spannhülse 51 eintritt und ein selbstständiges Lösen der Spannhülse 51 verhindert wird.

Grundsätzlich sind jedoch auch andere schnell schließende Verbindungseinheiten, die aus dem Stand der Technik bekannt sind, denkbar.

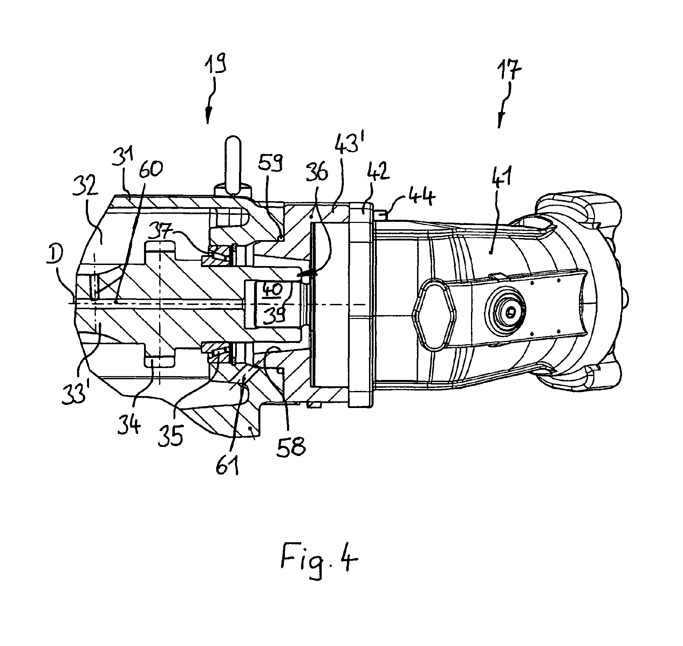

Die Figuren 4 und 5 zeigen eine zweite Ausführungsform einer Verbindungsanordnung zwischen dem Hydromotor 17 und dem ersten Einzugsgetriebe 19, wobei Bauteile, die mit dem Bauteilen gemäß der Ausführungsform nach Figuren 2 und 3 übereinstimmen, mit dem gleichen Bezugszeichen versehen sind.

Bei der zweiten Ausführungsform ist in der Lagerbohrung 37 des Getriebegehäuses 31 kein Radialwellendichtring vorgesehen. Vielmehr ist eine Dichtung 59 zwischen dem Adapter 43' und dem Getriebegehäuse 31 vorgesehen. Ferner ist in der Eingangswelle 33' ein Ölzuführkanal 60 vorgesehen, der die zentrale Bohrung 39 mit dem Getriebeinnenraum 32 verbindet, so dass Schmieröl aus dem Getriebeinnenraum 32 bis zur Bohrung 39 geführt werden kann. Das Öl kann dann grundsätzlich weiter zwischen den Längsverzahnungen der Bohrung 39 und der Antriebswelle 40 hindurch fließen.

Der Adapter 43' weist eine koaxial zur Drehachse D angeordnete zentrale konusförmige Aufnahmebohrung 48 auf, die sich zum Getriebegehäuse 31 hin erweitert. Die Aufnahmebohrung 58 ist derart angeordnet, dass sie das Wellenende 36 der Eingangswelle 33' aufnimmt, wobei das Wellenende 36 in die Aufnahmebohrung 58 eintaucht jedoch innerhalb der Aufnahmebohrung 58 endet. Die Eingangswelle 33' ist derart angeordnet, dass die Drehachse D horizontal angeordnet ist. Somit fließt Öl, das aus der Bohrung 39 hinaus fließt, in die Aufnahmebohrung 58 und wird aufgrund der Konusform der Aufnahmebohrung 58 in Richtung zum Getriebegehäuse 31 geleitet. Dort fließt es in die Lagerbohrung 37 des Getriebegehäuses 31, wobei in einem vertikal unteren Bereich der Lagerbohrung 37 ein Ölrücklaufkanal 61 vorgesehen ist, der von der Lagerbohrung 37 zurück in den Getriebeinnenraum 32 führt. Somit kann Öl zurück in den Getriebeinnenraum 32 fließen.

### Bezugszeichenliste

- 1: Antriebsmotor
- 2: Kurbelwelle
- 3: Motorabtriebsgetriebe
- 4: Riemenscheibe / Antriebsriemenscheibe
- 5: Riementrieb
- 6: Riemen
- 7: Schaltkupplung
- 8: Hydropumpe
- 9: erste Abtriebsriemenscheibe
- 10: Häckseltrommel
- 11: zweite Abtriebsriemenscheibe
- 12: Nachbeschleunigungstrommel
- 13: Riemenspanner
- 14: Schwenkachse
- 15: Getriebe
- 16: Gelenkwellenanordnung
- 17: Hydromotor
- 18: Einzugseinheit
- 19: erstes Einzugsgetriebe
- 20: Abtriebswelle
- 21: untere Einzugswalze
- 22: Gelenkwelle
- 23: zweites Einzugsgetriebe
- 24: obere Einzugswalze
- 25: Fahrzeuggestell
- 26: Scharnier
- 27: Schiene
- 28: Trägerfahrzeug
- 29: Häckseleinheit
- 30: Tragelement
- 31: Getriebegehäuse
- 32: Getriebeinnenraum
- 33, 33': Eingangswelle
- 34: Zahnradabschnitt
- 35: Kegelrollenlager
- 36: Wellenende
- 37: Lagerbohrung
- 38: Radialwellendichtring
- 39: Bohrung
- 40: Antriebswelle
- 41: Gehäuse
- 42: Flansch
- 43, 43': Adapter
- 44: Befestigungsschrauben
- 45: Schnellspanneinheit
- 46: Schraube
- 47: Gewindebohrung
- 48: Schraubenkopf
- 49: Gewindeabschnitt
- 50: Lagerabschnitt
- 51: Spannhülse
- 52: Spannfläche
- 53: Außenkontur
- 54: Flanschabschnitt
- 55: Ausnehmung
- 56: Spanngegenfläche
- 57: Außensechskant
- 58: Aufnahmebohrung
- 59: Dichtung
- 60: Ölzuführkanal
- 61: Ölrücklaufkanal

## Patentansprüche

1. Landwirtschaftliche Arbeitsmaschine, insbesondere Feldhäcksler, umfassend
ein Trägerfahrzeug (28),
eine dem Trägerfahrzeug (28) zugeordnete und an diesem montierte Einzugseinheit (18) mit mindestens einer Einzugswalze (21, 21'; 24, 24') zum Zuführen von Erntegut zu einer Häckseltrommel (10) zum Zerkleinern des Ernteguts und mit einem Einzugsgetriebe (19), das mit der mindestens einen Einzugswalze (21, 21'; 24, 24') antriebsverbunden ist,
einen Hydromotor (17) zum Antreiben des Einzugsgetriebes (19),
wobei der Hydromotor (17) eine Antriebswelle (40) aufweist,
**dadurch gekennzeichnet,**
**dass** die Einzugseinheit (18) zumindest teilweise lösbar am Trägerfahrzeug (28) befestigt ist,
**dass** der Hydromotor (17) dem Trägerfahrzeug (28) zugeordnet und an diesem montiert ist,
**dass** die Antriebswelle (40) des Hydromotors (17) lösbar mit einer Eingangswelle (33, 33') des Einzugsgetriebes (19) antriebsverbunden ist und
**dass** der Hydromotor (17) zwischen einer gekoppelten Stellung, in der er mit dem Einzugsgetriebe (19) antriebsverbunden ist, und einer entkoppelten Stellung, in der die Antriebsverbindung mit dem Einzugsgetriebe (19) unterbrochen ist, am Trägerfahrzeug (28) verstellbar ist.

2. Landwirtschaftliche Arbeitsmaschine nach Anspruch 1,
**dadurch gekennzeichnet,**
**dass** die Einzugseinheit (18) zwischen einer Arbeitsstellung und einer Wartungsstellung verstellbar, insbesondere schwenkbar, am Trägerfahrzeug (28) befestigt ist.

3. Landwirtschaftliche Arbeitsmaschine nach einem der Ansprüche 1 oder 2,
**dadurch gekennzeichnet,**
**dass** die Antriebswelle (40) des Hydromotors (17) formschlüssig mit der Eingangswelle (33, 33') des Einzugsgetriebes (19) lösbar verbunden ist.

4. Landwirtschaftliche Arbeitsmaschine nach Anspruch 3,
**dadurch gekennzeichnet,**
**dass** die Antriebswelle (40) des Hydromotors (17) auf einer Außenumfangsfläche eine Längsverzahnung aufweist,
**dass** die Eingangswelle (33, 33') des Einzugsgetriebes (19) eine zentrale Bohrung (39) mit Längsverzahnung aufweist und
**dass** bei mit dem Einzugsgetriebe (19) antriebsverbundenem Hydromotor (17) die Antriebswelle (40) formschlüssig in der Bohrung (39) der Eingangswelle (33, 33') sitzt.

5. Landwirtschaftliche Arbeitsmaschine nach Anspruch 4,
**dadurch gekennzeichnet,**
**dass** die Bohrung (39) der Eingangswelle (33, 33') im Schmierverbund mit dem Einzugsgetriebe (19) ist und mit einem Getriebeinnenraum (32) des Einzugsgetriebes (19) verbunden ist.

6. Landwirtschaftliche Arbeitsmaschine nach einem der Ansprüche 1 bis 5,
**dadurch gekennzeichnet**,
das der Hydromotor (17) über Schnellspanneinheiten (45) mit einem Getriebegehäuse (31) des Einzugsgetriebes (19) lösbar verbunden ist.

## Claims

1. Agricultural work machine, especially a forage harvester, comprising
a carrier vehicle (28),
a feeder unit (18), assigned to the carrier vehicle (28) and mounted thereon and having at least one feeder roller (21, 21'; 24, 24') for feeding harvesting goods to a chopper drum (10) for chopping the harvesting goods and having a feeder gearbox (19), which is drive-wise connected to the at least one feeder roller (21, 21'; 24, 24'),
a hydraulic motor (17) for driving the feeder gearbox (19),
wherein the hydraulic motor (17) has a drive shaft (40),
**characterised in**
**that** the feeder unit (18) is mounted at least partially detachably on the carrier vehicle (18),
**that** the hydraulic motor (17) is assigned to the carrier vehicle (28) and is mounted thereon,
**that** the drive shaft (40) of the hydraulic motor (17) is drive-wise connected detachably to an input shaft (33, 33') of the feeder gearbox (19) and that the hydraulic motor (17) is displaceable on the carrier vehicle (28) between a coupled position, in which it is drive-wise connected to the feeder gearbox (19), and a decoupled position, in which the drive connection to the feeder gearbox (19) is interrupted.

2. Agricultural work machine according to claim 1,
**characterised in**
**that** the feeder unit (18) is mounted displaceably, especially pivotably, between a working position and a maintenance position on the carrier vehicle (28).

3. Agricultural work machine according to one of claims 1 or 2,
**characterised in**
**that** the drive shaft (40) of the hydraulic motor (17) is detachably connected form-fittingly to the input shaft (33, 33') of the feeder gearbox (19).

4. Agricultural work machine according to claim 3,
**characterised in**
**that** the drive shaft (40) of the hydraulic motor (17) has on an outer circumferential face a longitudinal toothing,
**that** the input shaft (33, 33') of the feeder gearbox (19) has a central bore (39) with a longitudinal toothing and
**that** the drive shaft (40) rests form-fittingly in the bore (39) of the input shaft (33, 33') when the feeder gearbox (19) is drive-wise connected to the hydraulic motor (17).

5. Agricultural work machine according to claim 4,
**characterised in**
**that** the bore (39) of the input shaft (33, 33') is integrated into the lubrication system of the feeder gearbox (19) and is connected to the inner gearbox chamber (32) of the feeder gearbox (19).

6. Agricultural work machine according to one of claims 1 to 5,
**characterised in**
**that** the hydraulic motor (17) is detachably connected via quick clamping units (45) to a gearbox housing (31) of the feeder gearbox (19).

## Revendications

1. Machine de travail agricole, notamment récolteuse-hacheuse, comprenant
un véhicule porteur (28),
une unité d'alimentation (18) attribuée au véhicule porteur (28) et montée sur celui-ci avec au moins un cylindre d'alimentation (21, 21' ; 24, 24') pour acheminer le produit de récolte vers un tambour hacheur (10) pour broyer le produit de récolte et avec un mécanisme d'alimentation (19) qui est relié en entraînement avec au moins un cylindre d' alimentation (21, 21' ; 24, 24'),
un moteur hydraulique (17) pour entraîner le mécanisme d'alimentation (19),
le moteur hydraulique (17) comportant un arbre d'entraînement (40),
**caractérisée en ce que**
l'unité d'alimentation (18) est fixée sur le véhicule porteur (28) de manière à pouvoir être au moins partiellement démontée,
**en ce que** le moteur hydraulique (17) est attribué au véhicule porteur (28) et monté sur celui-ci,
**en ce que** l'arbre d'entraînement (40) du moteur hydraulique (17) est relié en entraînement de manière à pouvoir être démonté, à un arbre d'entrée (33, 33') du mécanisme d'alimentation (19),
**en ce que** le moteur hydraulique (17) est réglable sur
le véhicule porteur (28) entre une position accouplée dans laquelle il est relié en entraînement avec le mécanisme d'alimentation (19) et une position désaccouplée dans laquelle la liaison d'entraînement avec le mécanisme d'alimentation (19) est interrompue.

2. Machine de travail agricole selon la revendication 1,
**caractérisée en ce que**
l'unité d'alimentation (18) est fixée sur le véhicule porteur (28) de manière réglable, notamment pouvant pivoter, entre une position de travail et une position de service.

3. Machine de travail agricole selon l'une quelconque des revendications 1 ou 2,
**caractérisée en ce que**
l'arbre d'entraînement (40) du moteur hydraulique (17) est raccordé par complémentarité de forme, de manière à pouvoir être démonté, à l'arbre d'entrée (33, 33') du mécanisme d'alimentation (19).

4. Machine de travail agricole selon la revendication 3,
**caractérisée en ce que**
l'arbre d'entraînement (40) du moteur hydraulique (17) comporte une denture longitudinale sur une surface périphérique extérieure,
**en ce que** l'arbre d'entrée (33, 33') du mécanisme d'alimentation (19) comporte un alésage central (39) avec denture longitudinale, et
**en ce que** l'arbre d'entraînement (40) vient se placer par complémentarité de forme dans l'alésage (39) de l'arbre d'entrée (33, 33') lorsque le moteur hydraulique (17) est relié en entraînement au mécanisme d'alimentation (19).

5. Machine de travail agricole selon la revendication 4,
**caractérisée en ce que**
l'alésage (39) de l'arbre d'entrée (33, 33') est en combinaison de lubrification avec le mécanisme d'alimentation (19) et est relié à un compartiment antérieur de transmission (32) du mécanisme d'alimentation (19).

6. Machine de travail agricole selon l'une quelconque des revendications 1 à 5,
**caractérisée en ce que**
le moteur hydraulique (17) est raccordé de manière à pouvoir être démonté, à un carter de transmission (31) du mécanisme d'alimentation (19) par le biais d'unités à serrage rapide (45).
